# EUROPÄISCHE PATENTSCHRIFT

(11) **EP 2 927 029 B1**
(45) Veröffentlichungstag und Bekanntmachung des Hinweises auf die Patenterteilung: **13.06.2018**
(21) Anmeldenummer: 14163205.9
(22) Anmeldetag: 02.04.2014
(51) Int. Cl.: B60G 7/00

(54) **Verfahren zum Herstellen eines Fahrwerklenkers**
Method for producing a suspension arm
Procédé de fabrication d'un bras de suspension

(43) Veröffentlichungstag der Anmeldung: 07.10.2015
(73) Patentinhaber: Autotech Engineering Deutschland GmbH, 33647 Bielefeld (DE)
(72) Erfinder: Haselhorst, Kai, 33775 Versmold (DE); Friesen, Viktor, 33647 Bielefeld (DE); Geßner, Denis, 33649 Bielefeld (DE); Dejok, Carsten, 33334 Gütersloh (DE)
(74) Vertreter: Cohausz & Florack

(56) Entgegenhaltungen:
- EP-A1- 2 295 269
- EP-A2- 0 794 075
- WO-A1-2010/089705
- WO-A2-2010/004414
- DE-A1-102007 018 569
- DE-A1-102011 010 367
- FR-A1- 2 864 514
- GB-A- 2 291 382
- US-A1- 2011 127 743
- US-A1- 2014 062 050

## Beschreibung

Die Erfindung betrifft ein Verfahren zum Herstellen eines Fahrwerkslenkers, insbesondere eines Querlenker, der einen einschaligen, aus einer Blechplatine geformten Grundkörper aufweist, an dem Lagerbereiche zur Anbindung von Lagerelementen ausgebildet sind, mit denen der Grundkörper mit einem Karosserieteil oder Achsträger und einem beweglichen Teil einer Radaufhängung eines Kraftfahrzeuges verbindbar ist, wobei die Lagerbereiche einen radseitigen Lagerbereich und zwei karosserie- oder achsträgerseitige Lagerbereiche umfassen, wobei der Grundkörper zwei ineinander übergehende Arme aufweist, die eine Grundkörperebene und einen konkavförmigen Randbereich des Grundkörpers definieren, wobei sich der konkavförmige Randbereich von dem radseitigen Lagerbereich bis zu einem ersten der beiden karosserie- oder achsträgerseitigen Lagerbereiche erstreckt und relativ zu der Grundkörperebene abgewinkelt ist, wobei der zweite karosserie- oder achsträgerseitige Lagerbereich in Form eines Vorsprungs ausgebildet und mit einer Buchse versehen ist, und wobei der Vorsprung und der Arm, der den ersten karosserie- oder achsträgerseitigen Lagerbereich aufweist, eine Einbuchtung definieren, entlang derer der Grundkörper relativ zu der Grundkörperebene abgewinkelt ist, gemäß dem Oberbegriff des Anspruchs 1.

Fahrwerkslenker, die ein Bindeglied zwischen der Karosserie bzw. einem Achsträger eines Kraftfahrzeuges und einem dynamisch beweglichen Teil einer Radaufhängung, insbesondere einem Radträger bilden, sind in verschiedenen Ausführungen bekannt. Sie können als gegossene Bauteile oder als Schalen aus Stahlblech ausgebildet sein. Bei einem solchen Fahrwerkslenker kommt es neben seiner Formsteifigkeit und Verschleißbeständigkeit auch auf sein Gewicht an. Denn durch ein geringes Bauteilgewicht bei hoher Formsteifigkeit lassen sich eine Reduzierung des Fahrzeuggewichts und damit eine Verringerung des Kraftstoffverbrauchs erreichen.

Aus der DE 10 2007 018 569 A1 ist ein im Wesentlichen L-förmiger Fahrwerkslenker (Querlenker) bekannt, der einschalig ausgebildet ist, wobei am Ende einer seiner beiden Blecharme ein Lagerzapfen zur Anbindung eines buchsenförmigen Lagerelements angeordnet ist. Der Blecharm besitzt ein U-förmiges Querschnittprofils und läuft in eine Tülle aus, die den Lagerzapfen mit einem Umschlingungswinkel von mindestens 270° umschließt und mit dem Zapfen stoffschlüssig verbunden ist. Ein weiterer Lagerbereich des Fahrwerkslenkers weist eine Buchse auf, die an einem im Querschnitt U-förmigen Vorsprung, der am Übergang der ineinander übergehenden Blecharme ausgebildet ist, angeschweißt ist. Der Fahrwerkslenker wird aus einer Blechplatine in mehreren Arbeitsschritten geformt, insbesondere durch Tiefziehen, Beschneiden von Randabschnitten der vorgezogenen Platine und Umbiegen von beschnittenen Randabschnitten. Zwar lässt sich ein solcher Fahrwerkslenker wegen der einschaligen Blechbauweise kostengünstig herstellen, es hat sich jedoch herausgestellt, dass durch Umbiegen (Abstellen) eines beschnittenen Randabschnitts im Bereich des der Anbindung der Buchse dienenden Vorsprungs hohe Spannungen entstehen, die in diesem Bereich zu einer Rissbildung führen können.

Die FR 2 864 514 A1, die den Oberbegriff des Anspruchs 1 offenbart, zeigt ebenfalls einen im Wesentlichen L-förmigen Fahrwerkslenker, der einschalig ausgebildet ist, wobei am Ende einer seiner beiden Blecharme ein Kopplungselement zur Anbindung eines buchsenförmigen Lagerelements angeordnet ist. In der FR 2 864 514 A1 wird die Möglichkeit offenbart, die Randbereiche des Fahrwerkslenkers vor dem Tiefziehen zu beschneiden. Diesbezüglich wird allerdings auch auf den Nachteil von hierbei auftretenden Ungenauigkeiten, die in der Größenordnung von 15/100 der Blechdicke liegen, hingewiesen. Als weitere Möglichkeit, die Randbereiche herzustellen, wird die Verwendung einer bestimmten Tiefziehpresse genannt, die einen bekannten Beschneidungsmechanismus (Keilschieberbeschnitt) aufweist, wobei Nocken die Umformwerkzeuge betätigen. Allerdings führt auch diese Schneidtechnik zu Ungenauigkeiten, die in der Größenordnung von 1/10 eines Millimeters liegen. Zudem muss der Keilschieberbeschnitt im Werkzeug konstruiert werden, wodurch hohe Kosten und Qualitätsprobleme entstehen können. Ferner werden die Spannungsspitzen innerhalb des beschnittenen Randbereichs im Bereich der Anbindung der Buchse durch diese bekannten Fertigungsverfahren für einen Fahrwerkslenker nicht reduziert, wodurch weiterhin die Gefahr der Rissbildung in diesem Bereich besteht.

Davon ausgehend lag der Erfindung die Aufgabe zugrunde, ein Verfahren zum Herstellen eines Fahrwerkslenkers der eingangs genannten Art zu schaffen, das die Gefahr der Rissbildung aufgrund kritischer Umformgrade oder zu hoher Kantenspannungen im Rahmen der Umformung eliminiert und weiterhin kostengünstig ist.

Diese Aufgabe wird erfindungsgemäß durch ein Verfahren mit den in Anspruch 1 angegebenen Merkmalen gelöst. Bevorzugte und vorteilhafte Ausgestaltungen des erfindungsgemäßen Verfahrens sind in den Unteransprüchen angegeben.

Bei dem erfindungsgemäßen Verfahren wird die Blechplatine ebenfalls durch Tiefziehen umgeformt, wobei das Tiefziehen ein Vorziehen beinhaltet, bei welchem die Einbuchtung an dem der Anbindung der Buchse dienenden Vorsprung erzeugt wird. Diese - auch Kofferecke genannte - Einbuchtung wird beschnitten. Nach dem Beschneiden der Einbuchtung wird die Buchse an dem Vorsprung angebracht. Erfindungsgemäß wird die Blechplatine derart vorgezogen, dass die Einbuchtung einen Radius erhält, welcher der anzubindenden Buchse folgt, so dass nach dem Beschneiden der Einbuchtung keine weitere Umformung in der Einbuchtung erforderlich ist. Erfindungsgemäß findet - im Unterschied zum Stand der Technik - in der Einbuchtung keine weitere Umformung statt. Hierdurch werden kritische Umformgrade und/oder kritische Kantenspannungen, welche zu einer Rissbildung führen können, vermieden.

Das Beschneiden der Einbuchtung (Kofferecke) erfolgt bei dem erfindungsgemäßen Verfahren von oben, d.h. mittels eines Schneidwerkzeugs, das von oben schneidend auf die vorgezogene Blechplatine einwirkt, wobei ein an der Einbuchtung abzuschneidender Randabschnitt tiefer liegt als die Grundkörperebene.

Eine bevorzugte Ausgestaltung des erfindungsgemäßen Verfahrens sieht vor, dass der Vorsprung durch das Vorziehen der Blechplatine in der Weise ausgebildet wird, dass er ein im Wesentlichen U-förmiges Querschnittsprofil aufweist. Hierdurch erhält dieser Lagerbereich des Fahrwerkslenkers eine hohe Formsteifigkeit. Zudem bietet der so ausgebildete Vorsprung einen relativ großen Verbindungsbereich zur stoffschlüssigen Anbindung der Buchse. Vorzugsweise werden hierzu beide Schenkel des U-förmigen Querschnittsprofils mit der Buchse verschweißt.

Alternativ kann der Vorsprung gemäß einer anderen bevorzugten Ausgestaltung der Erfindung durch das Vorziehen der Blechplatine auch in der Weise ausgebildet werden, dass er relativ zu der Grundkörperebene des Fahrwerkslenkers abgewinkelt ist, wobei zuvor oder anschließend in einem Abschnitt der Blechplatine, welcher bei dem fertigen Fahrwerkslenker Teil des Vorsprungs ist, ein Lagerauge zur Aufnahme der Buchse erzeugt wird. Bei dieser Ausgestaltung ist der erforderliche Umformungsgrad zur Erzeugung des Vorsprungs relativ gering. Dementsprechend sind die an dem Vorsprung entstehenden Kantenspannungen gering. Zur Anbindung der Buchse an dem Vorsprung wird die Buchse vorzugsweise in das Lagerauge eingepresst. Zur Erzielung einer besonders zuverlässigen Buchsenanbindung wird das Lagerauge vor dem Einpressen der Buchse mit einem Durchzug (Kragen) versehen. Der Durchzug vergrößert die Anbindungsfläche und sichert die Buchse gegen Kippen gegenüber der Blechschale. Gemäß einer alternativen oder weiteren Ausgestaltung des Verfahrens kann die Buchse nach Aufnahme in dem Lagerauge mit demselben verschweißt werden.

Eine weitere vorteilhafte Ausgestaltung des erfindungsgemäßen Verfahrens ist dadurch gekennzeichnet, dass die Blechplatine beim Tiefziehen so geformt wird, dass der abgewinkelte, konkavförmige Randbereich des Fahrwerkslenkers zumindest entlang eines Bogenlängenabschnitts mindestens eine schräge Fläche aufweist, die im Querschnitt betrachtet mit einer an sie angrenzenden Fläche des abgewinkelten, konkavförmigen Randbereichs einen Winkel im Bereich von 25° bis 75° einschließt. Hierdurch wird bei vorgegebener oder beibehaltener Blechdicke bzw. konstantem Bauteilgewicht die Formsteifigkeit, insbesondere die zulässige Knicklast des Fahrwerkslenkers erhöht. Des Weiteren ergibt sich hierdurch eine gleichmäßigere Spannungsverteilung in dem Lenker im Fahrbetrieb. Außerdem lassen sich durch diese Ausgestaltung die durch das Umformen in dem abgewinkelten, konkavförmigen Randbereich des Fahrwerkslenkers entstehenden Spannungen verringern und dadurch die Verschleißbeständigkeit des Fahrwerkslenkers verbessern.

Die vorzugsweise an dem abgewinkelten, konkavförmigen Randbereich des Grundkörpers ausgebildete schräge Fläche entspricht oder ähnelt einer Fase. Sie kann entlang der gesamten Bogenlänge des abgewinkelten, konkavförmigen Randbereichs des Grundkörpers ausgebildet sein. Zur Erhöhung der Bauteilsteifigkeit, insbesondere Knicklast, und/oder zur Vergleichmäßigung der Spannungsverteilung in dem Grundkörper kann es allerdings auch ausreichen, wenn sich die schräge Fläche (Fase) gemäß einer in fertigungstechnischer Hinsicht vorteilhaften Ausgestaltung des erfindungsgemäßen Verfahrens nur über eine Teillänge der Bogenlänge des abgewinkelten, konkavförmigen Randbereichs erstreckt, beispielsweise über weniger als 80%, insbesondere weniger als 60% dieser Bogenlänge erstreckt. Insbesondere sieht eine Ausgestaltung des erfindungsgemäßen Verfahrens vor, dass der Bogenlängenabschnitt, über den sich die schräge Fläche erstreckt, mindestens 10%, vorzugsweise mindestens 20% der Bogenlänge des abgewinkelten, konkavförmigen Randbereichs beträgt.

Eine weitere vorteilhafte Ausgestaltung des erfindungsgemäßen Verfahrens ist dadurch gekennzeichnet, dass die Blechplatine beim Tiefziehen so geformt wird, dass sich der Winkel den die schräge Fläche mit einer an sie angrenzenden Fläche des abgewinkelten, konkavförmigen Randbereichs einschließt, entlang des Bogenlängenabschnitts ändert, wobei die Änderung mindestens 5°, vorzugsweise mindestens 10° beträgt. Hierdurch kann die Bauteilsteifigkeit, insbesondere die zulässige Knicklast weiter erhöht werden. Auch kann durch diese Ausgestaltung die im Grundkörper des Fahrwerkslenkers während des Fahrbetriebes auftretende Spannungsverteilung weiter vergleichmäßig bzw. optimiert werden.

Betriebsinterne Versuche haben ergeben, dass die Bauteilsteifigkeit bzw. aufnehmbare Knicklast des Fahrwerkslenkers insbesondere dann deutlich erhöht ist, wenn gemäß einer weiteren bevorzugten Ausgestaltung der Erfindung die Blechplatine beim Tiefziehen so geformt wird, dass die schräge Fläche an dem abgewinkelten, konkavförmigen Randbereich im Querschnitt betrachtet eine Länge im Bereich von 5 mm bis 20 mm aufweist.

Zudem wurde gefunden, dass die Bauteilsteifigkeit, die aufnehmbare Knicklast des Fahrwerkslenkers und/oder die Spannungsverteilung weiter optimiert werden, wenn gemäß einer bevorzugten Ausgestaltung der Erfindung die Blechplatine beim Tiefziehen so geformt wird, dass sich an dem abgewinkelten, konkavförmigen Randbereich die Länge der schrägen Fläche entlang des Bogenlängenabschnitts ändert, wobei die Änderung mindestens 1 mm, insbesondere mindestens 2 mm beträgt.

Vorteilhaft ist auch eine Ausführungsform des erfindungsgemäßen Verfahrens, bei welcher die Blechplatine beim Tiefziehen so geformt wird, dass der die schräge Fläche aufweisende Bogenlängenabschnitt den Grundkörperbereich kreuzt, in welchem die beiden Arme ineinander übergehen. Diese Ausgestaltung ist hinsichtlich der angestrebten Erhöhung der Bauteilsteifigkeit und der Vergleichmäßigung der Spannungsverteilung besonders effektiv.

Um ein möglichst geringes Gewicht bei hoher Bauteilsteifigkeit zu erzielen, sollte das Blech des Grundkörpers des Fahrwerkslenkers eine Dicke im Bereich von 2 mm bis 6 mm und eine Zugfestigkeit im Bereich von 350 MPa bis 1.200 MPa haben. Vorzugsweise wird zur Herstellung des Grundkörpers eine Blechplatine aus Dualphasenstahl verwendet. Auch sogenannte Complexphasenstähle oder thermomechanisch gewalzte Kaltformstähle sind zur Herstellung des erfindungsgemäßen Fahrwerkslenkers gut geeignet, wenn höhere Festigkeiten bzw. Bauteilsteifigkeiten gewünscht werden.

Nachfolgend wird die Erfindung anhand einer mehrere Ausführungsbeispiele darstellenden Zeichnung näher erläutert. Es zeigen:
- Fig. 1: einen aus Blech geformten einschaligen Fahrwerkslenker mit einer daran angebundenen Buchse in einer perspektivischen Darstellung;
- Fig. 2 und Fig. 3: einen Abschnitt des Fahrwerkslenkers aus Fig. 1 ohne die Buchse bzw. mit der Buchse in einer etwas vergrößerten perspektivischen Darstellung;

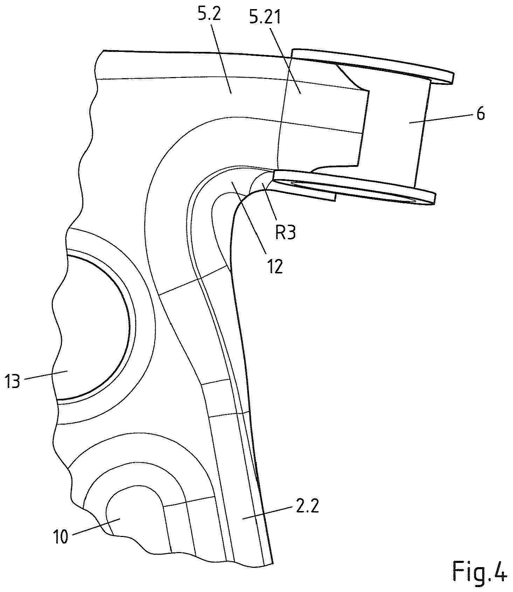

- Fig. 4: einen Abschnitt des Fahrwerkslenkers aus Fig. 1 mit der Buchse in einer etwas vergrößerten Draufsicht;
- Fig. 5: den Fahrwerkslenker aus Fig. 1 mit montierten Gummilagern in einer etwas vereinfachten Draufsicht;
- Fig. 6: eine vergrößerte Querschnittansicht eines Arms des Fahrwerkslenkers entlang der Schnittlinie A-A in Fig. 5;
- Fig. 7: eine zweite Ausführungsform eines aus Blech geformten einschaligen Fahrwerkslenkers in perspektivischer Ansicht;
- Fig. 8: eine dritte Ausführungsform eines aus Blech geformten einschaligen Fahrwerkslenkers in perspektivischer Ansicht; und
- Fig. 9: eine vierte Ausführungsform eines aus Blech geformten einschaligen Fahrwerkslenkers in perspektivischer Ansicht.

Der in der Zeichnung dargestellte Fahrwerkslenker (Querlenker) 1 weist einen Grundkörper 2 auf, der im Wesentlichen eine L-förmige oder dreieckige Konfiguration hat. Er ist als Vorderachsquerlenker für ein Kraftfahrzeug, insbesondere ein Personenkraftfahrzeug, ausgebildet. Der Grundkörper 2 des Fahrwerkslenkers 1 ist als einschaliges (einstückiges) Blechformteil gestaltet. Er ist aus einer Blechplatine zu der Schale umgeformt, insbesondere durch Tiefziehen. Der Grundkörper 2 weist zwei ineinander übergehende Arme 2.1, 2.2 auf, die eine Grundkörperebene 3 und einen konkavförmigen Randbereich 4 definieren.

An dem Grundkörper 2 sind Lagerbereiche 5.1, 5.2, 5.3 zur Anbindung von Lagerelementen ausgebildet. Die Lagerbereiche 5.2 und 5.3 sind karosserie- oder achsträgerseitige Lagerbereiche. Der Lagerbereich 5.2 ist in Form eines Vorsprungs 5.21 ausgebildet und mit einer Buchse 6, beispielsweise einer Bundbuchse versehen. Die Buchse 6 wird an dem Vorsprung 5.21 angeschweißt. Sie nimmt eine gummiummantelte Lagerbuchse 6.1 auf. Der Gummimantel 6.2 der Lagerbuchse 6.1 wird in die Buchse 6 eingepresst, eingeklebt oder eingespritzt.

Der Vorsprung 5.21 und der Arm 2.2, der an seinem Ende den Lagerbereich 5.3 aufweist, definieren eine Einbuchtung 12 oder sogenannte Kofferecke, entlang derer der Grundkörper 2 relativ zu der Grundkörperebene 3 abgewinkelt ist.

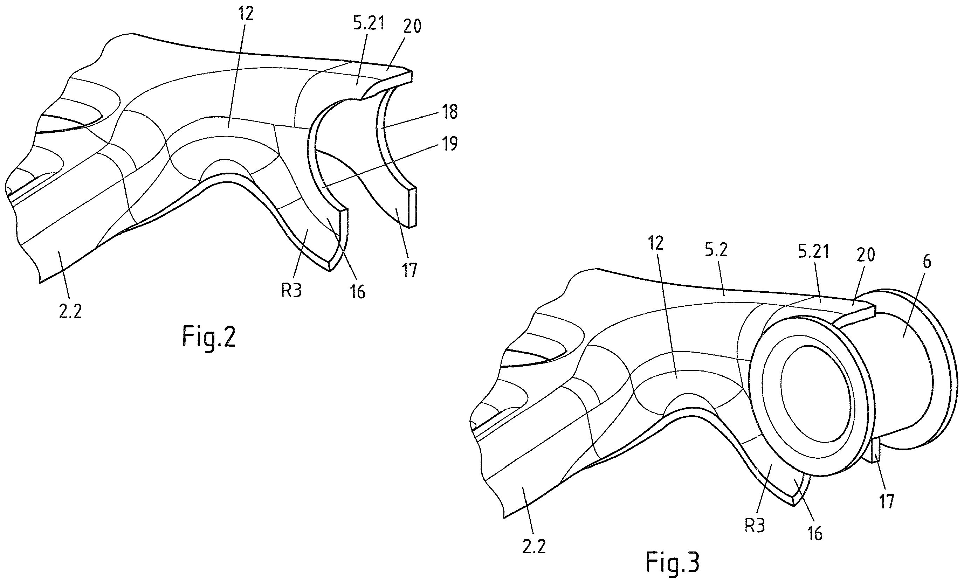

Das Umformen der Blechplatine beinhaltet ein Vorziehen. Die Blechplatine wird in einer Weise vorgezogen, dass der Radius R3 in der Einbuchtung (Kofferecke) 12 der später anzubindenden Buchse 6 folgt. Die Einbuchtung 12 wird beschnitten. Der Beschnitt erfolgt von oben. Da der Radius R3 in der Einbuchtung 12 bereits der anzubindenden Buchse 6 folgt, ist eine weitere Umformung in der Einbuchtung 12 nicht erforderlich. Es findet daher keine weitere Umformung in der Einbuchtung 12 statt. Der Vorsprung 5.21 (Lagerbereich 5.2) wird durch das Vorziehen der Blechplatine in der Weise ausgebildet, dass er ein im Wesentlichen U-förmiges Querschnittsprofil aufweist. Die beiden Schenkel (Flansche) 16, 17 des U-förmiges Querschnittsprofils sind durch das Vorziehen der Blechplatine im Wesentlichen gerade zur Buchse 6 ausgerichtet. In den Randbereich der Blechplatine, welcher den Vorsprung 5.21 definiert bzw. zur Bildung des Vorsprungs 5.21 umgeformt wird, wurden vorzugsweise vor dem Umformen (Vorziehen) konkave oder kreisabschnittförmige Ausnehmungen 18, 19 ausgeschnitten (vgl. Fig. 2).

Nach dem Vorziehen der Blechplatine und dem Beschnitt der Kofferecke (Einbuchtung) 12 wird die zylindrische Buchse 6 in die Ausnehmungen 18, 19 der Schenkel 16, 17 eingesetzt und mit diesen verschweißt. Vorzugsweise wird auch der Mittelsteg 20 des U-förmigen Querschnittsprofils mit der Mantelfläche der Buchse 6 verschweißt.

An dem radseitigen Lagerbereich 5.1 wird ein Lagerzapfen (nicht gezeigt) montiert, der typischerweise als Kugelgelenk ausgebildet ist. Der Lagerzapfen (Kugelgelenk) ist schwenkbar in einem Gehäuse (nicht gezeigt) gehalten. Das Gehäuse weist einen schalenförmigen Hohlraum auf, in welchem der Kugelkopf des Lagerzapfens aufgenommen ist. Das Gehäuse ist mit einem scheibenförmigen Befestigungsteil (nicht gezeigt) versehen, beispielsweise verschweißt. Das scheibenförmige Befestigungsteil des Kugelgelenkgehäuses ist mit drei Schrauben an den Befestigungslöchern 5.11 des radseitigen Lagerbereichs 5.1 angeschraubt.

Der als Lagerauge ausgebildete Lagerbereich 5.3 dient der Aufnahme eines Gummikörpers 7, der eine Lagerbuchse (Bundbuchse) 7.1 form- und stoffschlüssig umschließt. Das Lagerauge 5.3 weist einen umlaufenden Kragen (Durchzug) 5.31 auf.

Der konkavförmige Randbereich 4 des Grundkörpers 2 erstreckt sich von dem radseitigen Lagerbereich 5.1 bis zu einem karosserie- oder achsträgerseitigen Lagerbereich 5.3 und ist relativ zu der Grundkörperebene 3 abgewinkelt. Die dem konkaven Randbereich 4 gegenüberliegenden Randbereiche 8, 9 der Arme 2.1, 2.2 sind ebenfalls abgewinkelt, und zwar in etwa oder nahezu in die gleiche Richtung wie der konkavförmige Randbereich 4, so dass die Arme 2.1, 2.2 ein im Wesentlichen U- oder W-förmiges Querschnittsprofil haben. Der Grundkörper 2 weist an dem jeweiligen Lagerbereich 5.1, 5.2, 5.3 eine offene Querschnittsform auf.

In die Grundkörperebene 3 sind Sicken oder Vertiefungen 10, 11 eingeformt. Des Weiteren können in der Grundkörperebene 3 und/oder in mindestens einer der Vertiefungen 10, 11 Durchgangslöcher, beispielsweise eine einen umlaufenden Kragen (Durchzug) 13.1 aufweisende Öffnung 13 vorgesehen sein. Der Kragen 13.1, 5.31 steht dabei von der Seite des Grundkörpers 2 ab, von der auch die abgewinkelten Randbereiche 4, 8, 9 vorstehen.

Der konkavförmige Randbereich 4 des Grundkörpers 2 hat vorzugsweise eine schräge Fläche (Fase) 14, die im Querschnitt betrachtet mit der an sie angrenzenden Fläche 15 einen Winkel α im Bereich von 25° bis 75° einschließt (vgl. Fig. 2). Im Querschnitt betrachtet weisen die Flächen 14, 15 jeweils einen im Wesentlichen geraden Längen- oder Tiefenabschnitt auf. Die schräge Fläche 14 ist von zwei Radien oder runden Kanten R1, R2 begrenzt.

Die Fase 14 erstreckt sich zumindest entlang eines Bogenlängenabschnitts des abgewinkelten, konkaven Randbereichs 4, wobei dieser Bogenlängenabschnitt mindestens 10%, vorzugsweise mindestens 20% der Bogenlänge des konkaven Randbereichs 4 beträgt.

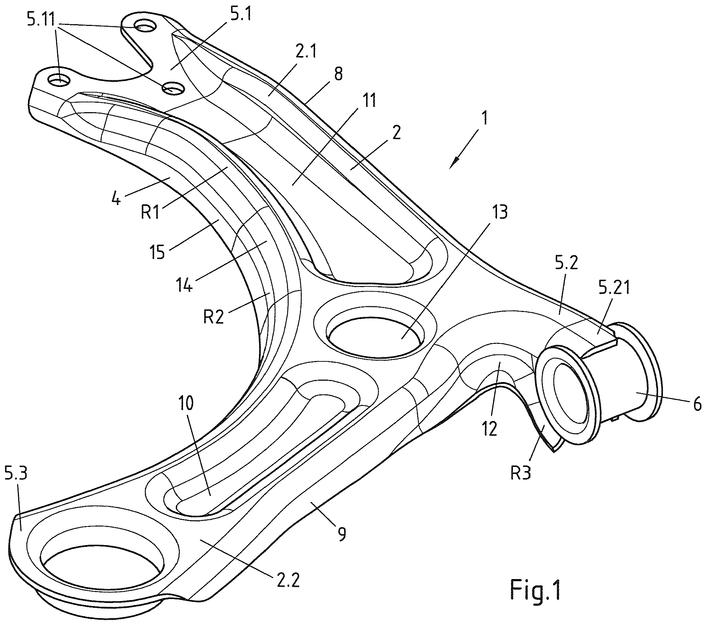

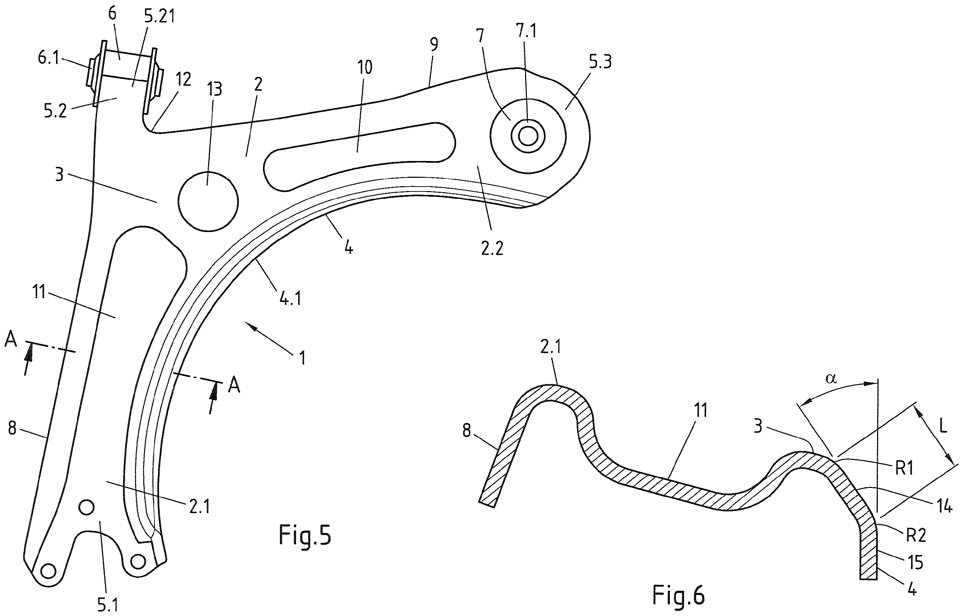

Bei dem in den Figuren 1, 5 und 6 dargestellten Ausführungsbeispiel erstreckt sich die schräge Fläche (Fase) 14 nahezu über die gesamte Bogenlänge des abgewinkelten, konkaven Randbereichs 4. Lediglich am Ende des Arms 2.1, an dem der Lagerbereich 5.1 ausgebildet ist, weist der abgewinkelte, konkave Randbereich 4 des Grundkörpers 2 einen Bogenlängenabschnitt ohne die Fase 14 auf (siehe Figuren 1 und 5).

Der Winkel a, den die schräge Fläche 14 mit der an sie angrenzenden Fläche 15 einschließt, ist entlang des Bogenlängenabschnitts bzw. abgewinkelten, konkaven Randbereichs 4 im Wesentlichen konstant ausgebildet. Der Winkel α beträgt beispielsweise ca. 35°(vgl. Fig. 6). Auch ist die Länge (Tiefe) L der schrägen Fläche 14 entlang des Bogenlängenabschnitts bzw. konkaven Randbereichs 4 im Wesentlichen konstant ausgebildet. An der Schnittlinie A-A in Fig. 5 beträgt die Länge (Tiefe) L beispielsweise ca. 15 mm (vgl. Fig. 6).

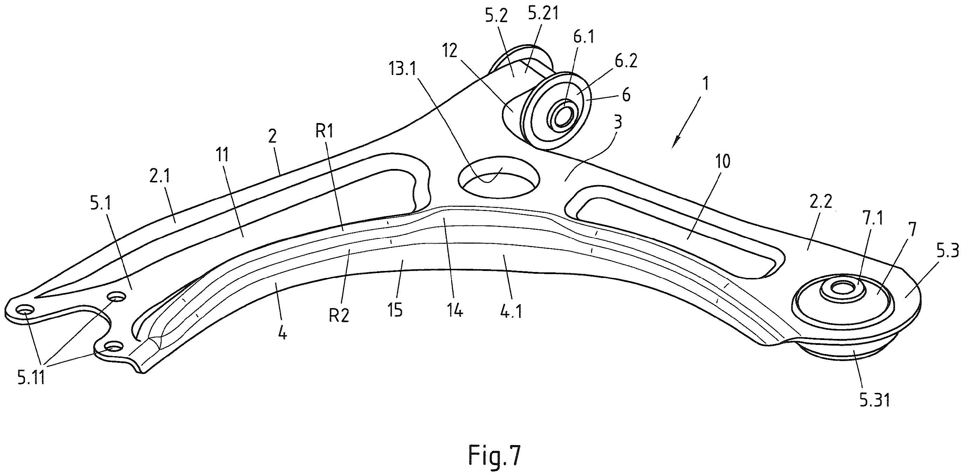

Das in Fig. 7 gezeigte Ausführungsbeispiel des erfindungsgemäßen Fahrwerkslenkers 1 unterscheidet sich von dem in den Figuren 1 und 5 dargestellten Beispiel dadurch, dass sich der Winkel a, den die schräge Fläche 14 mit der an sie angrenzenden Fläche 15 einschließt, entlang des Bogenlängenabschnitts bzw. abgewinkelten, konkaven Randbereichs 4 ändert. An dem mittleren Abschnitt des Arms 2.1 beträgt der Winkel α beispielsweise ca. 35°. Im mittleren Bereich 4.1 der Bogenlänge des abgewinkelten, konkaven Randbereichs 4, etwa dort, wo die Arme 2.1, 2.2 in einander übergehen bzw. der Randbereich 4 seinen kürzesten Abstand zu der Durchgangsöffnung 13 hat, ist der Winkel α dagegen deutlich größer. Beispielsweise liegt er dort im Bereich von 45° bis 60°. Ausgehend von dem mittleren Bereich 4.1 in Richtung des Endes des Blecharms 2.2, an welchem der Lagerbereich 5.3 ausgebildet ist, wird der Winkel α kleiner, wobei er am oder nahe dem Ende des Arms 2.2 beispielsweise einen Wert im Bereich von 30° bis 40° hat.

Ferner ist in Fig. 7 zu erkennen, dass sich die Länge (Tiefe) L der schrägen Fläche 14 entlang des Bogenlängenabschnitts bzw. abgewinkelten, konkaven Randbereichs 4 ändert. Im Querschnitt des jeweiligen Arms 2.1, 2.2 betrachtet hat die schräge Fläche 14 eine Länge L im Bereich von 5 mm bis 20 mm. An dem mittleren Abschnitt des Arms 2.1 beträgt die Länge (Tiefe) L beispielsweise ca. 15 mm. Dagegen ist die Länge L der schrägen Fläche 14 im mittleren Bereich 4.1 der Bogenlänge des Randbereichs 4, etwa dort, wo die Arme 2.1, 2.2 in einander übergehen bzw. der Randbereich 4 seinen kürzesten Abstand zu der Durchgangsöffnung 13 hat, deutlich größer. Beispielsweise beträgt sie dort zwischen 16 mm und 20 mm. Ausgehend von dem mittleren Bereich 4.1 in Richtung des Lagerauges 5.3 verringert sich die Länge (Tiefe) L der Fase 14, wobei sie am oder nahe dem Ende des Arms 2.2 beispielsweise einen Wert zwischen 5 mm und 15 mm besitzt.

Bei dem in Fig. 7 dargestellten Fahrwerkslenker 1 sind somit der Winkel α sowie die Länge (Tiefe) L der schrägen Fläche (Fase) 14 des abgewinkelten, konkaven Randbereichs 4 im mittleren Bereich 4.1 des Lenkers 1 deutlich größer als an den freien Enden seiner Arme 2.1, 2.2.

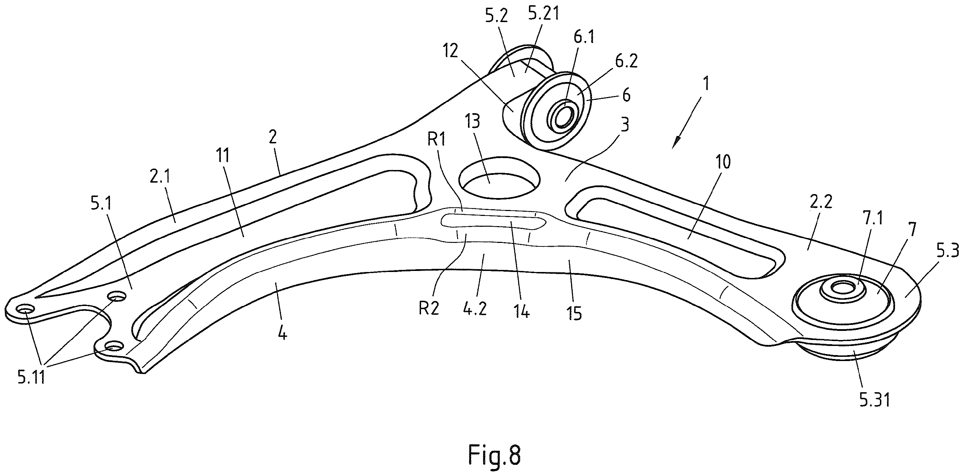

Das in Fig. 8 gezeigte Ausführungsbeispiel des erfindungsgemäßen Fahrwerkslenkers 1 unterscheidet sich von dem in den Figuren 1 und 5 dargestellten Beispiel dadurch, dass sich die schräge Fläche (Fase) 14 über eine deutlich kürzere Teillänge der Bogenlänge des abgewinkelten, konkaven Randbereichs erstreckt 4 als bei dem in den Figuren 1 und 5 gezeigten Fahrwerkslenker. Die Fase 14 erstreckt sich hier im Wesentlichen entlang eines Bogenlängenabschnitts 4.2, der nahe der Öffnung 13 bzw. zwischen den einander zugewandeten Enden der Vertiefungen 10, 11 des Grundkörpers 2 liegt. Die Arme 2.1, 2.2 des Querlenkers 1 gehen in diesem Bogenlängenabschnitt 4.2 ineinander über. In dem Ausführungsbeispiel gemäß Fig. 8 ändern sich der Winkel α und die Länge (Tiefe) L der schrägen Fläche 14 über den Verlauf der Fläche 14 kaum oder nur wenig.

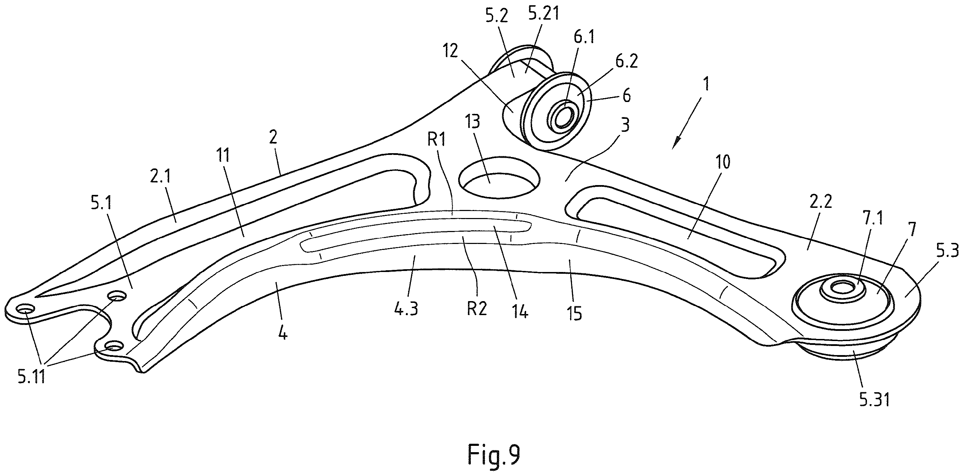

Auch das weitere, in Fig. 9 gezeigte Ausführungsbeispiel des erfindungsgemäßen Fahrwerkslenkers unterscheidet sich von dem in den Figuren 1 und 5 dargestellten Beispiel dadurch, dass sich die schräge Fläche 14 über eine deutlich kürzere Teillänge der Bogenlänge des abgewinkelten, konkaven Randbereichs 4 erstreckt als beim Fahrwerkslenker gemäß den Figuren 1 und 5. Die Fase 14 erstreckt sich in diesem Fall im Wesentlichen entlang eines Bogenlängenabschnitts 4.3, der nahe der Öffnung 13 (bzw. Lenkermitte) und neben einem Längsabschnitt der Vertiefung 11 des Arms 2.1 liegt. Bei dem Fahrwerkslenker 1 gemäß Fig. 9 ändern sich der Winkel α und die Länge (Tiefe) L der schrägen Fläche 14 über den Verlauf der Fläche 14 kaum oder nur wenig.

Die Ausführung der Erfindung ist nicht auf die in der Zeichnung dargestellten Ausführungsbeispiele beschränkt. Vielmehr sind weitere Varianten denkbar, die auch bei von diesen Beispielen abweichender Gestaltung von der in den beiliegenden Ansprüchen angegebenen Erfindung Gebrauch machen. Beispielsweise kann der Vorsprung durch das Vorziehen der Blechplatine auch in der Weise ausgebildet werden, dass er relativ zu der Grundkörperebene 3 abgewinkelt ist, wobei zuvor oder anschließend in einem Abschnitt der Blechplatine, welcher bei dem fertigen Fahrwerkslenker Teil des Vorsprungs ist, ein Lagerauge zur Aufnahme der Buchse 6 erzeugt wird. Die Buchse 6 wird in diesem Fall in das Lagerauge eingepresst und/oder nach Aufnahme in dem Lagerauge mit demselben verschweißt.

Des Weiteren kann der Fahrwerkslenker 1 entlang eines Bogenlängenabschnitts des abgewinkelten, konkavförmigen Randbereichs 4 auch zwei oder mehr aufeinander folgende schräge Flächen (Fasen) 14 aufweisen, die jeweils im Querschnitt betrachtet mit einer an sie angrenzenden Fläche 15 des abgewinkelten, konkavförmigen Randbereichs 4 einen Winkel im Bereich von 25° bis 75° einschließen.

## Patentansprüche

1. Verfahren zum Herstellen eines Fahrwerkslenkers (1), der einen einschaligen, aus einer Blechplatine geformten Grundkörper (2) aufweist, an dem Lagerbereiche (5.1, 5.2, 5.3) zur Anbindung von Lagerelementen ausgebildet sind, mit denen der Grundkörper (2) mit einem Karosserieteil oder Achsträger und einem beweglichen Teil einer Radaufhängung eines Kraftfahrzeuges verbindbar ist, wobei die Lagerbereiche einen radseitigen Lagerbereich (5.1) und zwei karosserie- oder achsträgerseitige Lagerbereiche (5.2, 5.3) umfassen, wobei der Grundkörper (2) zwei ineinander übergehende Arme (2.1, 2.2) aufweist, die eine Grundkörperebene (3) und einen konkavförmigen Randbereich (4) des Grundkörpers definieren, wobei sich der konkavförmige Randbereich (4) von dem radseitigen Lagerbereich (5.1) bis zu einem ersten (5.3) der beiden karosserie- oder achsträgerseitigen Lagerbereiche (5.3) erstreckt und relativ zu der Grundkörperebene (3) abgewinkelt ist, wobei der zweite karosserie- oder achsträgerseitige Lagerbereich (5.2) in Form eines Vorsprungs (5.21) ausgebildet und mit einer Buchse (6) versehen ist, und wobei der Vorsprung (5.21) und der Arm (2.2), der den ersten karosserie- oder achsträgerseitigen Lagerbereich (5.3) aufweist, eine Einbuchtung (12) definieren, entlang derer der Grundkörper (2) relativ zu der Grundkörperebene (3) abgewinkelt ist, bei dem die Blechplatine durch Tiefziehen umgeformt wird, wobei das Tiefziehen ein Vorziehen, bei welchem die Einbuchtung (12) erzeugt wird, beinhaltet, und bei dem die Einbuchtung (12) beschnitten und nach dem Beschneiden der Einbuchtung (12) die Buchse (6) an dem Vorsprung (5.21) angebracht wird, wobei die Blechplatine derart vorgezogen wird, dass die Einbuchtung (12) einen Radius (R3) erhält, welcher der anzubindenden Buchse (6) folgt, so dass nach dem Beschneiden der Einbuchtung (12) keine weitere Umformung in der Einbuchtung (12) erforderlich ist, **dadurch gekennzeichnet, dass** das Beschneiden der Einbuchtung (12) mittels eines Schneidwerkzeugs erfolgt, das von oben schneidend auf die vorgezogene Blechplatine einwirkt, wobei ein an der Einbuchtung (12) abzuschneidender Randabschnitt tiefer liegt als die Grundkörperebene (3).

2. Verfahren nach Anspruch 1, **dadurch gekennzeichnet, dass** der Vorsprung (5.21) durch das Vorziehen der Blechplatine in der Weise ausgebildet wird, dass er ein im Wesentlichen U-förmiges Querschnittsprofil aufweist.

3. Verfahren nach Anspruch 2, **dadurch gekennzeichnet, dass** beide Schenkel (16, 17) des U-förmiges Querschnittsprofils mit der Buchse (6) verschweißt werden.

4. Verfahren nach Anspruch 1, **dadurch gekennzeichnet, dass** der Vorsprung (5.21) durch das Vorziehen der Blechplatine in der Weise ausgebildet wird, dass er relativ zu der Grundkörperebene (3) abgewinkelt ist, wobei zuvor oder anschließend in einem Abschnitt der Blechplatine, welcher bei dem fertigen Fahrwerkslenker Teil des Vorsprungs ist, ein Lagerauge zur Aufnahme der Buchse (6) erzeugt wird.

5. Verfahren nach Anspruch 4, **dadurch gekennzeichnet, dass** die Buchse (6) in das Lagerauge eingepresst wird.

6. Verfahren nach Anspruch 4 oder 5, **dadurch gekennzeichnet, dass** die Buchse (6) nach Aufnahme in dem Lagerauge mit demselben verschweißt wird.

7. Verfahren nach einem der Ansprüche 1 bis 6, **dadurch gekennzeichnet, dass** die Blechplatine beim Tiefziehen so geformt wird, dass der abgewinkelte, konkavförmige Randbereich (4) zumindest entlang eines Bogenlängenabschnitts (4.2, 4.3) mindestens eine schräge Fläche (14) aufweist, die im Querschnitt betrachtet mit einer an sie angrenzenden Fläche (15) des abgewinkelten, konkavförmigen Randbereichs einen Winkel (α) im Bereich von 25° bis 75° einschließt.

8. Verfahren nach Anspruch 7, **dadurch gekennzeichnet, dass** die Blechplatine beim Tiefziehen so geformt wird, dass sich der Winkel (α), den die schräge Fläche (14) mit einer an sie angrenzenden Fläche (15) des abgewinkelten, konkavförmigen Randbereichs (4) einschließt, entlang des Bogenlängenabschnitts ändert, wobei die Änderung mindestens 5°, vorzugsweise mindestens 10° beträgt.

9. Verfahren nach Anspruch 7 oder 8, **dadurch gekennzeichnet, dass** die Blechplatine beim Tiefziehen so geformt wird, dass die schräge Fläche (14) im Querschnitt betrachtet eine Länge (L) im Bereich von 5 mm bis 20 mm aufweist.

10. Verfahren nach einem der Ansprüche 7 bis 9, **dadurch gekennzeichnet, dass** die Blechplatine beim Tiefziehen so geformt wird, dass sich die Länge (L) der schrägen Fläche (14) entlang des Bogenlängenabschnitts ändert, wobei die Änderung mindestens 1 mm, insbesondere mindestens 2 mm beträgt.

11. Verfahren nach einem der Ansprüche 7 bis 10, **dadurch gekennzeichnet, dass** die Blechplatine beim Tiefziehen so geformt wird, dass der die schräge Fläche (14) aufweisende Bogenlängenabschnitt (4.2, 4.3) den Grundkörperbereich kreuzt, in welchem die beiden Arme (2.1, 2.2) ineinander übergehen.

12. Verfahren nach einem der Ansprüche 1 bis 11, **dadurch gekennzeichnet, dass** die verwendete Blechplatine eine Dicke im Bereich von 2 mm bis 6 mm und eine Zugfestigkeit im Bereich von 350 MPa bis 1.200 MPa besitzt.

13. Verfahren nach einem der Ansprüche 1 bis 12, **dadurch gekennzeichnet, dass** die verwendete Blechplatine aus Dualphasenstahl, Complexphasenstahl oder thermomechanisch gewalztem Kaltformstahl besteht.

## Claims

1. Method for producing a chassis link (1) which comprises a single-shell main body (2) shaped from a sheet metal blank, on which bearing regions (5.1, 5.2, 5.3) are formed for attaching bearing elements by which the main body (2) can be connected to a bodywork part or a crossmember and to a movable part of a wheel suspension of a motor vehicle, the bearing regions comprising a wheel-side bearing region (5.1) and two bodywork-side or crossmember-side bearing regions (5.2, 5.3), the main body (2) comprising two arms (2.1, 2.2) which merge into one another and define a main-body plane (3) and a concave edge region (4) of the main body, the concave edge region (4) extending from the wheel-side bearing region (5.1) up to a first (5.3) of the two bodywork-side or crossmember-side bearing regions (5.3) and being angled relative to the main-body plane (3), the second bodywork-side or crossmember-side bearing region (5.2) being formed as a projection (5.21) and provided with a bush (6), and the projection (5.21) and the arm (2.2), which comprises the first bodywork-side or crossmember-side bearing region (5.3), defining an indentation (12), along which the main body (2) is angled relative to the main-body plane (3), in which the sheet metal blank is deformed by deep drawing, the deep drawing including pre-drawing during which the indentation (12) is produced, and in which the indentation (12) is trimmed and the bush (6) is attached to the projection (5.21) once the indentation (12) has been trimmed, wherein the sheet metal blank is pre-drawn such that the indentation (12) is given a radius (R3) which matches the bush (6) to be attached such that there is no need for a further forming operation in the indentation (12) once the indentation (12) has been trimmed, **characterised in that** the indentation (12) is trimmed by means of a cutting tool which acts on the pre-drawn sheet metal blank so as to cut from above, an edge portion to be cut off from the indentation (12) being lower than the main-body plane (3).

2. The method according to claim 1, **characterised in that** the projection (5.21) is formed, as a result of the pre-drawing of the sheet metal blank, so as to have a substantially U-shaped cross-sectional profile.

3. The method according to claim 2, **characterised in that** both legs (16, 17) of the U-shaped cross-sectional profile are welded to the bush (6).

4. The method according to claim 1, **characterised in that** the projection (5.21) is formed, as a result of the pre-drawing of the sheet metal blank, so as to be angled relative to the main-body plane (3), a bearing eyelet for receiving the bush (6) being produced beforehand or subsequently in a portion of the sheet metal blank that forms part of the projection in the finished chassis link.

5. The method according to claim 4, **characterised in that** the bush (6) is pressed into the bearing eyelet.

6. The method according to either claim 4 or claim 5, **characterised in that** the bush (6) is welded to the bearing eyelet once received therein.

7. The method according to any of claims 1 to 6, **characterised in that** the sheet metal blank is shaped during deep drawing such that the angled, concave edge region (4) comprises, along at least one curve length portion (4.2, 4.3), at least one oblique surface (14) which, when viewed in cross section, encloses an angle (α) in the range of from 25° to 75° with a surface (15), adjacent thereto, of the angled, concave edge region.

8. The method according to claim 7, **characterised in that** the sheet metal blank is shaped during deep drawing such that the angle (α) enclosed by the oblique surface (14) and a surface (15), adjacent thereto, of the angled, concave edge region (4) varies along the curve length portion, the variation being at least 5°, preferably at least 10°.

9. The method according to either claim 7 or claim 8, **characterised in that** the sheet metal blank is shaped during deep drawing such that the oblique surface (14), when viewed in cross section, has a length (L) in the range of from 5 mm to 20 mm.

10. The method according to any of claims 7 to 9, **characterised in that** the sheet metal blank is shaped during deep drawing such that the length (L) of the oblique surface (14) varies along the curve length portion, the variation being at least 1 mm, in particular at least 2 mm.

11. The method according to any of claims 7 to 10, **characterised in that** the sheet metal blank is shaped during deep drawing such that the curve length portion (4.2, 4.3) having the oblique surface (14) crosses the region of the main body in which the two arms (2.1, 2.2) merge into one another.

12. The method according to any of claims 1 to 11, **characterised in that** the sheet metal blank used has a thickness in the range of from 2 mm to 6 mm and a tensile strength in the range of from 350 MPa to 1200 MPa.

13. The method according to any of claims 1 to 12, **characterised in that** the sheet metal blank used consists of dual-phase steel, complex phase steel or thermomechanically rolled, cold-formed steel.

## Revendications

1. Procédé de fabrication d'un bras de suspension (1) qui présente un corps de base (2) monocoque mis en forme à partir d'une platine de tôle, corps de base sur lequel sont configurées des zones de support (5.1, 5.2, 5.3) servant à la fixation d'éléments de support au moyen desquels le corps de base (2) peut être assemblé avec une partie de carrosserie ou avec un support d'essieu, et avec une pièce mobile d'une suspension de roue d'un véhicule automobile, où les zones de support comprennent une zone de support (5.1) située côté roue et deux zones de support (5.2, 5.3) situées côté carrosserie ou côté support d'essieu, où le corps de base (2) présente deux bras (2.1, 2.2) se fondant l'un dans l'autre, bras qui définissent un plan de corps de base (3) et une zone de bordure (4) - de forme concave - du corps de base, où la zone de bordure (4) de forme concave s'étend depuis la zone de support (5.1) située côté roue jusqu'à une première zone (5.3) des deux zones de support (5.3) situées côté carrosserie ou côté support d'essieu et est coudée par rapport au plan (3) du corps de base, où la deuxième zone de support (5.2) située côté carrosserie ou côté support d'essieu est configurée sous la forme d'une partie saillante (5.21) et est dotée d'une douille (6), et où la partie saillante (5.21) et le bras (2.2), bras qui présente la première zone de support (5.3) située côté carrosserie ou côté support d'essieu, définissent un creux formant une anse (12) le long de laquelle le corps de base (2) est coudé par rapport au plan (3) du corps de base, corps de base dont la platine de tôle est mise en forme par emboutissage profond, où l'emboutissage profond comprend un préemboutissage au cours duquel est réalisé le creux formant une anse (12) et au cours duquel le creux formant une anse (12) est découpé et, après la découpe du creux formant une anse (12), la douille (6) est fixée sur la partie saillante (5.21), où la platine de tôle est préemboutie de manière telle, que le creux formant une anse (12) ait un rayon (R3) qui suit la douille (6) à fixer, de sorte qu'après la découpe du creux formant une anse (12), aucune autre mise en forme n'est nécessaire dans le creux formant une anse (12),
**caractérisé en ce que** la découpe du creux formant une anse (12) est réalisée au moyen d'un outil de coupe qui agit sur la platine de tôle préemboutie, en coupant à partir d'en haut, où une partie de bordure à découper au niveau du creux formant une anse (12) est située en étant plus basse que le plan (3) du corps de base.

2. Procédé selon la revendication 1, **caractérisé en ce que** la partie saillante (5.21) est configurée par le préemboutissage de la platine de tôle, de manière telle que ladite partie saillante présente un profil de section pratiquement en forme de U.

3. Procédé selon la revendication 2, **caractérisé en ce que** les deux branches (16, 17) du profil de section en forme de U sont soudées avec la douille (6).

4. Procédé selon la revendication 1, **caractérisé en ce que** la partie saillante (5.21) est façonnée par le préemboutissage de la platine de tôle, de manière telle que ladite partie saillante soit coudée par rapport au plan (3) du corps de base où, avant ledit préemboutissage ou bien après celui-ci, un oeillet de palier servant au logement de la douille (6) est réalisé dans un tronçon de la platine de tôle, tronçon qui, dans le cas du bras de suspension fini, forme un élément constitutif de la partie saillante.

5. Procédé selon la revendication 4, **caractérisé en ce que** la douille (6) est enfoncée dans l'oeillet de palier.

6. Procédé selon la revendication 4 ou 5, **caractérisé en ce que** la douille (6), après avoir été logée dans l'oeillet de palier, est soudée avec le ledit oeillet.

7. Procédé selon l'une quelconque des revendications 1 à 6, **caractérisé en ce que** la platine de tôle est mise en forme au cours de l'emboutissage profond, de manière telle que la zone de bordure coudée (4), de forme concave, présente, au moins le long d'une partie longitudinale arquée (4.2, 4.3), au moins une surface oblique (14) qui, vue en section, forme, avec une surface (15) - placée en étant contiguë à ladite surface oblique - de la zone de bordure coudée, de forme concave, un angle (α) se situant dans la plage comprise entre 25° et 75°.

8. Procédé selon la revendication 7, **caractérisé en ce que** la platine de tôle est mise en forme au cours de l'emboutissage profond, de manière telle que l'angle (α), qui englobe la surface oblique (14) ainsi qu'une surface (15) - placée en étant contiguë à ladite surface oblique - de la zone de bordure coudée (4), de forme concave, se modifie le long de la partie longitudinale arquée, où la modification est au moins de 5°, de préférence au moins de 10°.

9. Procédé selon la revendication 7 ou 8, **caractérisé en ce que** la platine de tôle est mise en forme au cours de l'emboutissage profond, de manière telle que la surface oblique (14), vue en section, présente une longueur (L) se situant dans la plage comprise entre 5 mm et 20 mm.

10. Procédé selon l'une quelconque des revendications 7 à 9, **caractérisé en ce que** la platine de tôle est mise en forme au cours de l'emboutissage profond, de manière telle que la longueur (L) de la surface oblique (14) se modifie le long de la partie longitudinale arquée, où la modification est au moins de 1 mm, en particulier au moins de 2 mm.

11. Procédé selon l'une quelconque des revendications 7 à 10, **caractérisé en ce que** la platine de tôle est mise en forme au cours de l'emboutissage profond, de manière telle que la partie longitudinale arquée (4.2, 4.3) présentant la surface oblique (14) coupe la zone du corps de base, zone dans laquelle les deux bras (2.1, 2.2) se fondent l'un dans l'autre.

12. Procédé selon l'une quelconque des revendications 1 à 11, **caractérisé en ce que** la platine de tôle utilisée a une épaisseur se situant dans la plage comprise entre 2 mm et 6 mm, et a une résistance à la traction se situant dans la plage comprise entre 350 MPa et 1200 MPa.

13. Procédé selon l'une quelconque des revendications 1 à 12, **caractérisé en ce que** la platine de tôle utilisée se compose d'un acier de type *Dual Phase,* d'un acier de type *Complex Phase* ou bien d'un acier apte au formage à froid, ledit acier étant laminé thermomécaniquement.
